# EUROPÄISCHE PATENTSCHRIFT

(11) **EP 0 934 649 B1**
(45) Veröffentlichungstag und Bekanntmachung des Hinweises auf die Patenterteilung: **13.09.2000**
(21) Anmeldenummer: 97950026.1
(22) Anmeldetag: 24.10.1997
(51) Int. Cl.: H04N 3/15

(54) **VERFAHREN ZUM ERFASSEN EINES BILDSIGNALS**
IMAGE SIGNAL SENSING PROCESS
PROCEDE DE DETECTION D'UN SIGNAL D'IMAGE

(30) Priorität: 25.10.1996 DE 19644479
(43) Veröffentlichungstag der Anmeldung: 11.08.1999
(73) Patentinhaber: FRAUNHOFER-GESELLSCHAFT ZUR FÖRDERUNG DER ANGEWANDTEN FORSCHUNG E.V., 80636 München (DE); Bayerische Motoren Werke Aktiengesellschaft, 80809 München (DE); Bodenseewerk Gerätetechnik GmbH, 88662 Überlingen (DE)
(72) Erfinder: SCHANZ, Michael, D-46147 Oberhausen (DE); HOSTICKA, Bedrich, D-47058 Duisburg (DE); WERTHEIMER, Reiner, D-82211 Herrsching (DE); KISAKÜREK, Hakan, D-81476 München (DE)
(74) Vertreter: Schoppe, Fritz, Dipl.-Ing.
(86) Internationale Anmeldenummer: EP9705899
(87) Internationale Veröffentlichungsnummer: WO9819454

(56) Entgegenhaltungen:
- WO-A-90/01844
- RENSHAW D ET AL: "ASIC IMAGE SENSORS" 1.Mai 1990 , PROCEEDINGS OF THE INTERNATIONAL SYMPOSIUM ON CIRCUITS AND SYSTEMS, NEW ORLEANS, MAY 1 - 3, 1990, VOL. 4 OF 4, PAGE(S) 3038 - 3041 , INSTITUTE OF ELECTRICAL AND ELECTRONICS ENGINEERS XP000164172 siehe Seite 3039, linke Spalte, Zeile 1 - Zeile 14; Abbildung 1

## Beschreibung

Die vorliegende Erfindung bezieht sich auf ein Verfahren zum Erfassen eines Bildsignals mittels eines Arrays von photoempfindlichen Bauelementen, mit denen jeweils die Ladung einer Kapazität veränderbar ist. Ein solches Verfahren ist beispielsweise aus WO-A-9001844 bekannt.

In monolithisch integrierten Bildsensorsystemen werden üblicherweise Arrays aus Sensorelementen zusammen mit der Elektronik zur Signalauslese auf einer integrierten Schaltung (IC) gefertigt. Bei der integrierten optischen Sensorik können als lichtempfindliche Bauelemente Photodioden, bipolare Phototransistoren, ladungsgekoppelte Bauelemente (CCDs) und lichtempfindliche MOS-Transistoren verwendet werden. Die lichtabhängigen Signale, d.h. die Ladung, die Spannung oder der Strom, der Arrays aus den oben genannten Bauelementen werden in der Regel ausgelesen und später in ein digitales Signal gewandelt und weiterverarbeitet. Alternativ können diese lichtabhängigen Signale ohne eine Analog/Digital-Umsetzung direkt zur Anzeige gebracht werden.

Es ist bekannt, Bildsignale mittels eines integrierenden Verfahrens auszulesen. Dabei wird beispielsweise ein Signalstrom eines lichtempfindlichen Bauelements über einen bestimmten Zeitraum auf eine Kapazität aufintegriert. Durch diese Aufintegration wird eine Beleuchtungsstärke- und Zeitraum-proportionale Signalspannung erzeugt, die dann leicht von einer peripheren Schaltung auf der integrierten Schaltung ausgelesen werden kann. Bei einem Beispiel eines lichtempfindlichen Bauelements gemäß dem Stand der Technik wird dabei eine Kapazität, die anfänglich mit einem vorbestimmten Potential beladen wurde, durch einen durch das lichtempfindliche Bauelement erzeugten Photostrom entladen.

Bei einigen Anwendungen, beispielsweise im Automobilbereich, wo es häufig wechselnde Helligkeitsverhältnisse und starke Helligkeitsunterschiede innerhalb einer Bildaufnahme gibt, sind die Anforderungen an die Dynamik der Bildsignale sehr groß. Eine derart große Dynamik der Bildsignale, die eine Folge einer zu starken Schwankung der Beleuchtungsstärke innerhalb einer Bildaufnahme ist, ist durch das oben beschriebene Verfahren gemäß dem Stand der Technik nicht zu bewältigen. Wenn beispielsweise für bestimmte Bildsensorelemente die Beleuchtungsstärke zu hoch ist, sinkt die Spannung der anfangs mit einer vorbestimmten Spannung beladenen Kapazität sehr schnell ab, wobei nach dem Verstreichen des Zeitraums, über den die Kapazität durch den Signalstrom des lichtempfindlichen Bauelements entladen wird, nicht mehr beurteilt werden kann, wie hoch die einfallende Beleuchtungsstärke ursprünglich gewesen ist, wenn die Kapazität nach dem Verstreichen des Zeitraums vollständig entladen ist. Daher weist das bekannte Verfahren einen begrenzten Dynamikbereich auf.

Die US-A-4479062 beschreibt eine Vorrichtung zur photoelektrischen Umwandlung, bei der ein Array aus Lichtempfangselementen vorgesehen ist, um Informationen bezüglich eines einfallenden Lichts zu akkumulieren. Die bekannte Vorrichtung weist eine Sättigungserfassungseinrichtung zum Erfassen einer Sättigung eines Ausgangssignals des Lichtempfangselement-Arrays auf. Ist das Ausgangssignal des Lichtempfangselement-Arrays gesättigt, wird die Akkumulationszeit reduziert. Gemäß der US-A-4479062 wird die Erfassungszeit solange reduziert, bis keines der Bildempfangselemente des Bildempfangselement-Arrays übersättigt ist, d.h. bis das Ausgangssignal des Lichtempfangselement-Arrays einen Sättigungspegel nicht mehr überschreitet. Überschreitet das Ausgangssignal des Lichtempfangselement-Arrays den Sättigungspegel nicht mehr, weisen alle Bildsensorelemente ein gültiges Signal auf, woraufhin dann das mit der letzten ermittelten Integrationszeit akquirierte Bild ausgewertet wird.

Das aus der US-A-4479062 bekannte Verfahren ist nachteilig dahingehend, daß trotz des Aufwandes einer mehrfachen Bildakquisition das resultierende Bild Bildsensorelemente aufweisen kann, die einen geringen Signal/Rausch-Abstand haben, beispielsweise Bildsensorelemente mit kleinen Helligkeitswerten. Für einen Betrachter ist es jedoch vorteilhaft, wenn bei einer akquirierten realen Szene ein möglichst großer Signal/Rausch-Abstand vorliegt. Ein großer Signal/Rausch-Abstand bedeutet für den Betrachter, daß einerseits statische und zeitlich gleich beleuchtete Objekte in ihrer Abbildung auch wirklich statisch erscheinen, und daß die Auflösung geringer Kontraste innerhalb einer Szene möglich ist. Ein weiterer Nachteil des bekannten Verfahrens besteht darin, daß der Dynamikbereich für die Gesamtheit aller Bildsensorelemente des akquirierten Bilds auf den physikalisch begrenzten Dynamikbereich, d.h. das Verhältnis vom maximalen Signal zum äquivalenten Rauschsignal, eines Bildsensorelements für eine Bildakquisition beschränkt ist. Ein hoher Dynamikbereich bedeutet für einen Betrachter, daß sowohl sehr helle als auch sehr dunkle Bereiche einer realen Szene abgebildet werden können, ohne ab einer bestimmten Schwelle gleich hell oder gleich dunkel zu wirken.

Die Aufgabe der vorliegenden Erfindung besteht darin, ein Verfahren zum Erfassen eines optischen Signals zu schaffen, das einen erhöhten Dynamikbereich bzw. eine erhöhte Genauigkeit aufweist.

Diese Aufgabe wird durch ein Verfahren gemäß Anspruch 1 gelöst.

Die vorliegende Erfindung schafft ein Verfahren zum Erfassen eines Bildsignals mittels eines Arrays von photoempfindlichen Bauelementen, mit denen jeweils die Ladung einer Kapazität veränderbar ist, bei dem zunächst ein optisches Signal jedes photoempfindlichen Bauelements mittels folgender Teilschritte erfaßt wird: Erzeugen eines Ladungszustands der Kapazität mit einer vorbestimmten Spannung, Verändern der Ladung der Kapazität mit einem von dem optischen Signal in dem photoempfindlichen Bauelement erzeugten Photostrom oder einer von demselben abgeleiteten Größe und Erfassen der Spannung über der Kapazität nach einer vorbestimmten Zeitdauer, Beurteilen, ob die erfaßte Spannung in einem gültigen Bereich liegt und, falls dies der Fall ist, Bestimmen eines gültigen, das erfaßte optische Signal charakterisierenden Signals aufgrund der erfaßten Spannung, und, wenn dies nicht der Fall ist, Wiederholen der genannten Schritte mit einer von der vorbestimmten Zeitdauer abweichenden Zeitdauer für eine vorbestimmte Anzahl von Malen oder bis bestimmt wird, daß die erfaßte Spannung in einem gültigen Bereich liegt. Nachfolgend wird das für jedes photoempfindliche Bauelement erfaßte optische Signal zusammen mit der Zeitdauer, für die ein gültiges Signal erfaßt wurde, gespeichert. Abschließend wird das Bildsignal aus den gespeicherten optischen Signalen für die einzelnen photoempfindlichen Bauelemente und den jeweils zugeordneten Zeitdauern gewonnen.

Bei einem Ausführungsbeispiel des erfindungsgemäßen Verfahrens wird in dem Beurteilungsschritt beurteilt, daß die erfaßte Spannung nicht in dem gültigen Bereich liegt, wenn die erfaßte Spannung einer vollständigen Entladung der Kapazität entspricht. In diesem Fall wird die von der vorbestimmten Zeitdauer abweichende Zeitdauer, nach der die Spannung erfaßt wird, bei jeder Wiederholung verringert.

Das erfindungsgemäße Verfahren liefert eine Erweiterung des Dynamikbereichs bei der Erfassung optischer Signale, beispielsweise bei der Bildaufnahme mittels eines aus Bildsensorelementen bestehenden Bildsensorarrays. Das Verfahren gemäß der vorliegenden Erfindung verhindert das Verlassen des Arbeitsbereichs, d.h. eine Übersteuerung, einzelner Bildsensorelemente ebenso wie eine Übersteuerung des gesamten Bildsensorarrays.

Gemäß der vorliegenden Erfindung wird somit nach jeder Akquisition eines Bildes für jedes Bildsensorelement beurteilt, ob ein gültiges Signal vorliegt. Wenn dies der Fall ist, wird der Wert des betreffenden Bildsensorelements zusammen mit der Information über die Integrationszeit beispielsweise in einem Zwischenspeicher abgelegt. Dies wird auch dann durchgeführt, wenn es bereits ungültige Signale von Bildsensorelementen in diesem Teilbild gegeben hat. Die Steuerung der Helligkeitswerte und Informationen über die Integrationszeit kann beispielsweise durch einen Digitalprozessor realisiert werden.

Bei bevorzugten Ausführungsbeispielen der vorliegenden Erfindung wird bei der Akquisition eines Teilbilds mit der größten Empfindlichkeit, d.h. der längsten Integrationszeit, begonnen. Dies stellt sicher, daß alle Bildsensorelemente ein unter den gegebenen Voraussetzungen maximales Signal/Rausch-Verhältnis aufweisen. Wenn abschließend bei verkürzter Integrationszeit immer noch verbleibende Bildsensorelemente übersteuert sind, d.h. keine gültigen Signale aufweisen, können die Bildsensorelemente im Zwischenspeicher beispielsweise den maximal darstellbaren Wert annehmen oder die gewählten Integrationszeiten gegebenenfalls verkürzt werden.

Das Ergebnis dieser mehrfachen Akquisition von Bildern ist ein zusammengesetztes Bild von Bildsensorelementen aus Teilbildern, die gegebenenfalls mit verschiedenen Integrationszeiten akquiriert wurden. Um das Bild auswerten zu können, müssen offensichtlicherweise in einem weiteren Schritt die Helligkeitswerte und Informationen für die Integrationszeit miteinander verrechnet werden, so daß für jedes Bildsensorelement die wirkliche Helligkeitsinformation erhalten wird. Diese Verrechnung könnte beispielsweise softwaremäßig erfolgen.

Das erfindungsgemäße Verfahren verbessert nicht nur den Signal/Rausch-Abstand für jedes Bildsensorelement, sondern den Dynamikbereich der Gesamtheit aller im Bild enthaltenen Bildsensorelemente. Beispielsweise kann ein einzelnes Bildsensorelement einen Dynamikbereich, der hier als Verhältnis von maximalem Signal zum äquivalenten Rauschsignal definiert ist, von 60dB besitzen, was ein typischer Wert für Photodioden ist. Wenn nun mehrere Bilder mit verschiedenen Integrationszeiten, d.h. Empfindlichkeiten, akquiriert werden, umfaßt die Variation der Integrationszeit beispielsweise lms bis 10 µs, was 40 dB entspricht. Der resultierende Dynamikbereich für die Gesamtheit aller im Bild enthaltenen Bildsensorelemente ergibt sich dann aus der einfachen Addition beider Dynamikwerte zu 60 dB + 40 dB = 100 dB.

Bevorzugte Ausführungsbeispiele der vorliegenden Erfindung werden nachfolgend bezugnehmend auf die beiliegenden Zeichnungen näher erläutert. Es zeigen:
- Fig. 1: ein Bildsensorelement, das zur Verwendung bei dem erfindungsgemäßen Verfahren geeignet ist;
- Fig. 2A und 2B: zeitliche Schemata einer Signalerfassung zur Veranschaulichung des erfindungsgemäßen Verfahrens; und
- Fig. 3: eine schematische Darstellung, die veranschaulicht, wie die mittels des erfindungsgemäßen Verfahrens erfaßten optischen Signale weiter ausgewertet werden können.

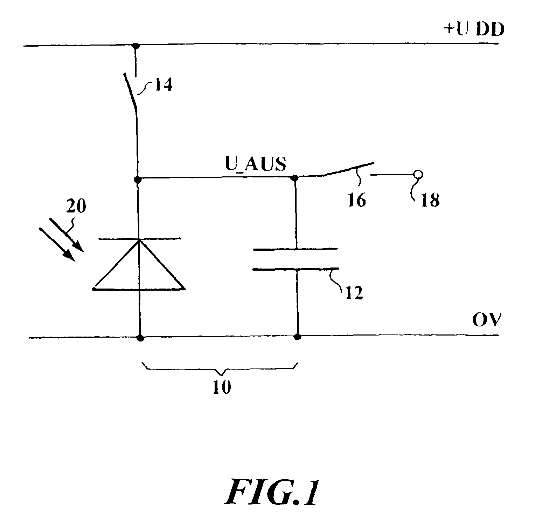

Die vorliegende Erfindung wird nachfolgend anhand eines bevorzugten Ausführungsbeispiels derselben, bei der eine Photodiode als Bildsensorelement verwendet ist, beschrieben. In Fig. 1 ist eine Photodiode 10 gezeigt, wobei zur Veranschaulichung die Sperrschichtkapazität 12 derselben als diskretes Element dargestellt ist. Die Kathode der Photodiode 10 ist über einen Schalter 14 mit einem Potential +U_DD verbindbar. Die Anode der Photodiode 10 ist mit einem Potential von 0V, d.h. Masse, verbunden. Die Kathode der Photodiode 10 ist über einen Schalter 16 ferner mit einem Ausgangsanschluß 18 verbindbar.

Zu Beginn des Auslesevorgangs wird zunächst der Schalter 14 geschlossen, während der Schalter 16 geöffnet ist, wodurch eine Ausgangsspannung U_aus auf die Spannung U_DD zurückgesetzt wird und die Sperrschichtkapazität 12 der Photodiode 10 auf die Spannung U_DD geladen wird. Danach wird der Schalter 14 geöffnet. Nun wird durch eine Beleuchtung 20, die durch ein optisches Signal, beispielsweise ein Bildsignal mit einer bestimmten Beleuchtungsstärke, bewirkt wird, ein Photostrom in der Photodiode 10 generiert, der auf der Sperrschichtkapazität 12 der Photodiode 10 aufintegriert wird. Durch diesen durch Beleuchtung generierten Signalstrom sinkt die Spannung U_aus mit der Zeit ab. Nach einer festen vorbestimmten Zeitdauer wird der Schalter 16 geschlossen. Dadurch kann die resultierende Signalspannung U_aus, die charakteristisch für die auf die Photodiode 10 einfallende Beleuchtung 20 ist, am Ausgangsanschluß 18 ausgelesen werden.

Das erfindungsgemäße Verfahren besteht nun darin, das Signal jedes Bildsensorelements in einem Bildsensorarray, wobei die in Fig. 1 dargestellte Photodiode ein derartiges Bildsensorelement darstellt, mehrmals zeitlich hintereinander zu integrieren und zu beurteilen, ob es sich jeweils um ein gültiges Signal handelt, wobei bei den Integrationen jeweils unterschiedliche Integrationszeiten verwendet werden. Ein gültiges Signal liegt dann vor, wenn die Ausgangsspannung U_aus innerhalb eines gültigen Bereichs liegt.

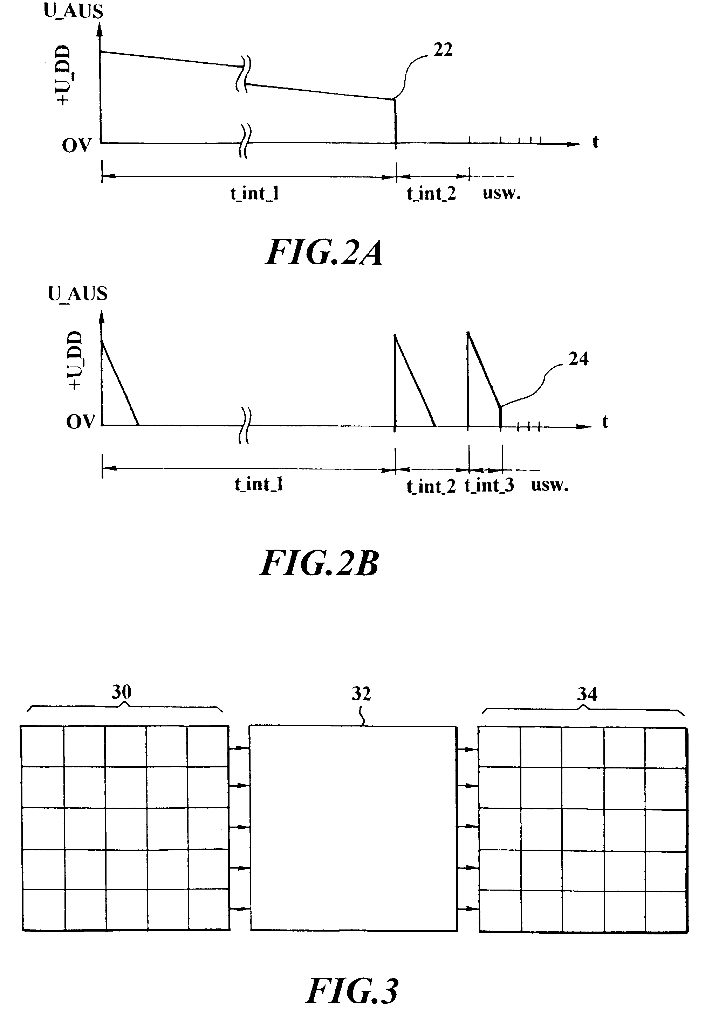

In den Fig. 2A und 2B sind Zeitverläufe der Spannung U_aus an dem Ausgangsknoten 18 für das in Fig. 1 dargestellte Bildsensorelement gezeigt. Das in Fig. 1 dargestellte Bildsensorelement liefert solange ein gültiges Ausgangssignal, solange die Sperrschichtkapazität 12 sich zum Zeitpunkt des Auslesens noch nicht vollständig entladen hat. In Fig. 2A ist die Photodiode mit einer niedrigen Beleuchtungsstärke beaufschlagt, weshalb nach der Integrationszeit, d.h. der Erfassungszeit, t_int_1 die Sperrschichtkapazität 12 nicht vollständig entladen ist. Daher wird nach der Zeit t_int_1 ein gültiges Ausgangssignal 22 erhalten, das proportional zu der Beleuchtungsstärke, mit der die Photodiode beaufschlagt wird, und proportional zu dem Zeitraum, über den der Photostrom integriert wird, d.h. während dessen die Kapazität entladen wird, ist. Eine erneute Erfassung über einen kürzeren Zeitraum t_int_2 ist in diesem Fall, d.h. bei der geringen Beleuchtungsstärke nicht notwendig.

In Fig. 2B ist die Spannung U_aus über der Zeit für eine große Beleuchtungsstärke, mit der die Photodiode beaufschlagt wird, dargestellt. Die Kapazität wird daher schnell von der Spannung +U_DD auf die Spannung 0V entladen. Daher ergibt sich während des Zeitraums t_int_1 kein gültiges Ausgangssignal. Folglich wird eine weitere Erfassung während eines Zeitraums t_int_2 durchgeführt, der kürzer als der Zeitraum t_int_1 ist. Auch zum Auslesezeitpunkt nach diesem zweiten Zeitraum ist die Kapazität bereits vollständig entladen. Somit ergibt sich wiederum kein gültiges Signal. Erst bei einer weiteren Verkürzung des Erfassungszeitraums, d.h. t_int_3, ist die Kapazität zum Erfassungszeitpunkt nicht vollständig entladen. Somit ergibt sich ein gültiges Ausgangssignal am Ende des dritten Zeitraums t_int_3.

Durch die zunehmende Verkürzung der Integrationszeit, d.h. des Erfassungszeitraums, wenn die vorherigen Erfassungen kein gültiges Ausgangssignal ergeben, wird der Dynamikbereich für die Gesamtheit aller im Bild enthaltenen Bildsensorelemente vergrößert.

Fig. 3 zeigt eine Vorrichtung, die zur Auswertung von mittels eines Bildsensorarrays erlangten Bildinformationen verwendet werden kann. Ein Bildsensorarray 30, das aus einzelnen Bildsensorelementen besteht, die jeweils ein optisches Signal erfassen, von denen beispielhaft fünfundzwanzig in Fig. 3 dargestellt sind, ist über eine Steuerschaltung 32 mit einem Zwischenspeicher 34 verbunden. In dem Zwischenspeicher 34 kann beispielsweise jedem Bildelement des Bildsensorarrays 30 ein bestimmter Speicherplatz zugeordnet sein. Die Steuervorrichtung 32 veranlaßt, wie oben erläutert, wenn nötig, einen mehrfachen Zugriff auf die Bildsensorelemente des Bildsensorarrays 30. Ferner beurteilt die Steuervorrichtung 32 jeweils, ob von den Bildsensorelementen nach der jeweiligen Erfassungszeit ein gültiges Signal vorliegt. Die jeweils gültigen Signale werden durch die Steuervorrichtung 32 zusammen mit den Informationen über die jeweilige Integrationszeit an dem jeweiligen Speicherplatz in dem Zwischenspeicher 34, d.h. dem Bildspeicher, abgelegt. Für eine ordnungsgemäße Zuordnung ist es vorteilhaft, daß für jede Integrationszeit ein Zugriff auf jedes Pixel stattgefunden hat. Es ist ferner vorteilhaft, diesen Zugriff und das Beschreiben des Zwischenspeichers zu parallelisieren. Aus dem Bildspeicher 34 können nun die Bildinformationen zusammen mit den Zusatzinformationen über die jeweilige Integrationszeit ausgelesen und nachfolgend verarbeitet oder zur Anzeige gebracht werden.

Bei einem zu dem oben beschriebenen alternativen Ausführungsbeispiel des erfindungsgemäßen Verfahrens kann statt der in den Fig. 2A und 2B dargestellten langen anfänglichen Integrationszeit t_int_1 zu Beginn des Verfahrens eine kurze Integrationszeit, beispielsweise t_int_3 verwendet werden. Unter einem gültigen Ausgangssignal würde dann ein solches verstanden werden, dessen Spannung um mehr als einen vorbestimmten Prozentsatz bezüglich der Spannung +U_DD abgefallen ist. Dieser Prozentsatz könnte beispielsweise 10% von der Spannung +U_DD betragen. Liegt die Ausgangsspannung in dem ungültigen Bereich, d.h. ist sie um weniger als 10% abgefallen, würde die Integrationszeit verlängert werden, beispielsweise ausgehend von t_int_3 auf t_int_2. Dadurch könnte die Empfindlichkeit der Bildsensorelemente eines Bildsensorarrays erhöht werden.

Es ist offensichtlich, daß statt der beschriebenen Photodiode andere lichtempfindliche Bauelemente als Bildsensorelemente verwendet werden können, solange das optische Signal, z.B. die Beleuchtungsstärke, über eine Änderung der Ladung einer Kapazität über einen vorbestimmten Zeitraum erfaßt wird. Derartige alternative Bauelemente sind beispielsweise bipolare Phototransistoren oder lichtempfindliche MOS-Transistoren.

Die Variation der Integrationszeiten, solange kein gültiges Signal erfaßt wird, wird im Normalfall solange fortgesetzt, bis ein gültiges Signal erfaßt wird. Alternativ kann die Wiederholung der Erfassung mit unterschiedlichen Integrationszeiten nur für eine bestimmte Anzahl von Malen durchgeführt werden, woraufhin beispielsweise ein vorgegebener Wert für die Beleuchtungsstärke verwendet wird.

Es ist offensichtlich, daß zur Veränderung der Ladung der Kapzität statt der direkten Verwendung des Photostroms eine von dem Photostrom abgeleitete Größe, die beispielsweise durch eine Verstärkerschaltung oder dergleichen aufbereitet ist, verwendet werden kann.

Die vorliegende Erfindung ist neben der Bilderfassung beispielsweise auch bei Überwachungsverfahren im Außenbereich vorteilhaft einsetzbar.

## Patentansprüche

1. Verfahren zum Erfassen eines Bildsignals mittels eines Arrays (30) von photoempfindlichen Bauelementen (10), mit denen jeweils die Ladung einer Kapazität (12) veränderbar ist, mit folgenden Schritten:
a) Erfassen eines optischen Signals (20) jedes photoempfindlichen Bauelements mittels folgender Teilschritte:
a1) Erzeugen eines Ladungszustands der Kapazität mit einer vorbestimmten Spannung (+U_DD),
a2) Verändern der Ladung der Kapazität (12) mit einem von dem optischen Signal (20) in dem photoempfindlichen Bauelement (10) erzeugten Photostrom oder einer von demselben abgeleiteten Größe und Erfassen der Spannung über der Kapazität (12) nach einer vorbestimmten Zeitdauer,
a3) Beurteilen, ob die erfaßte Spannung in einem gültigen Bereich liegt und, falls dies der Fall ist, Bestimmen eines gültigen, das erfaßte optische Signal charakterisierenden Signals aufgrund der erfaßten Spannung, und, wenn dies nicht der Fall ist,
a4) Wiederholen der Schritte a1) bis a3) mit einer von der vorbestimmten Zeitdauer abweichenden Zeitdauer für eine vorbestimmte Anzahl von Malen oder bis im Schritt a3) bestimmt wird, daß die erfaßte Spannung in einem gültigen Bereich liegt;
b) Speichern des für jedes photoempfindliche Bauelement (10) bestimmten gültigen, das erfaßte optische Signal charakterisierenden Signals zusammen mit der Zeitdauer, für die ein gültiges Signal erfaßt wurde, wobei, wenn in den Schritten a1) bis a4) ein gültiges, das erfaßte optische Signal charakterisierendes Signal nicht erfaßt wird, ein vorgegebenes Signal gespeichert wird; und
c) Gewinnen des Bildsignals aus den gespeicherten optischen Signalen für die einzelnen photoempfindlichen Bauelemente und den jeweils zugeordneten Zeitdauern.

2. Verfahren gemäß Anspruch 1, bei dem der Schritt a1) das Laden der Kapazität (12) auf die vorbestimmte Spannung umfaßt und im Schritt a2) die Kapazität (12) durch den Photostrom oder eine von demselben abgeleitete Größe entladen wird.

3. Verfahren gemäß Anspruch 2, bei dem im Schritt a3) beurteilt wird, daß die erfaßte Spannung nicht in dem gültigen Bereich liegt, wenn die erfaßte Spannung einer vollständigen Entladung der Kapazität (12) entspricht, wobei die von der vorbestimmten Zeitdauer abweichende Zeitdauer, nach der die Spannung erfaßt wird, bei jeder Wiederholung verringert wird.

4. Verfahren gemäß Anspruch 2, bei dem in Schritt a3) beurteilt wird, daß die erfaßte Spannung nicht in dem gültigen Bereich liegt, wenn die erfaßte Spannung einer geringen Entladung der Kapazität (12) entspricht, wobei die von der vorbestimmten Zeitdauer abweichende Zeitdauer, nach der die Spannung erfaßt wird, bei jeder Wiederholung vergrößert wird.

5. Verfahren gemäß einem der Ansprüche 2 bis 4, bei dem als photoempfindliches Bauelement (10) eine Photodiode verwendet wird, wobei die Kapazität (12) die Sperrschichtkapazität der Photodiode ist.

6. Verfahren gemäß einem der Ansprüche 1 bis 5, bei dem das gültige Signal im Schritt b) jeweils zusammen mit der zur Erfassung desselben verwendeten Zeitdauer in einem Zwischenspeicher (34) abgelegt wird.

## Claims

1. A method for detecting an image signal by means of an array (30) of photosensitive devices (10) with each of which the charge of a capacitance (12) can be altered, comprising the following steps:
a) detecting an optical signal (20) of each photosensitive device by means of the following substeps:
a1) creating a charge condition of the capacitance with a predetermined voltage (+U_DD),
a2) changing the charge of the capacitance (12) either with a photocurrent generated in the photosensitive device (10) by the optical signal (20) or with a quantity derived from the same and detecting the voltage across the capacitance (12) after a predetermined time period,
a3) deciding whether the detected voltage lies within a valid range and, if this is so, determining on the basis of the detected voltage a valid signal which characterizes the detected optical signal, and, if this is not so,
a4) repeating the steps a1) to a3) with a time period which differs from the predetermined time period either a predetermined number of times or until it is determined in step a3) that the detected voltage lies in a valid range;
b) storing the valid signal, determined for each photosensitive device (10) and characterizing the detected optical signal, together with the time period for which a valid signal has been detected, wherein a predetermined signal is stored if a valid signal characterizing the detected optical signal is not detected in steps a1) to a4); and
c) obtaining the image signal from the stored optical signals for the individual photosensitive devices and the respective assigned time periods.

2. A method according to claim 1, wherein the step a1) comprises the charging of the capacitance (12) to the predetermined voltage and in step a2) the capacitance (12) is discharged by the photocurrent or by a quantity derived from the same.

3. A method according to claim 2, wherein in step a3) it is decided that the detected voltage does not lie in the valid range if the detected voltage corresponds to a complete discharge of the capacitance (12), the time period after which the voltage is detected, which differs from the predetermined time period, being reduced for each repetition.

4. A method according to claim 2, wherein in step a3) it is decided that the detected voltage does not lie in the valid range if the detected voltage corresponds to a small discharge of the capacitance (12), the time period after which the voltage is detected, which differs from the predetermined time period, being increased for each repetition.

5. A method according to one of the claims 2 to 4, wherein a photodiode is used as the photosensitive device (10), the capacitance (12) being the blocking layer capacitance of the photodiode.

6. A method according to one of the claims 1 to 5, wherein in step b) the valid signal is stored in each case in an intermediate memory (34) together with the time period used for detecting said signal.

## Revendications

1. Procédé de détection d'un signal d'image à l'aide d'une rangée (30) d'éléments photosensibles (10) par lesquels peut chaque fois être modifiée la charge d'une capacité (12), aux étapes suivantes consistant à :
a) capter un signal optique (20) de chaque élément photosensible, à l'aide des étapes partielles suivantes :
a1) générer un état de charge de la capacité (12) par une tension prédéterminée (+U_DD),
a2) modifier la charge de la capacité (12) par un courant photoélectrique généré dans l'élément photosensible (10) par le signal optique (20) ou une valeur dérivée de ce dernier, et capter la tension passant par la capacité (12) après un laps de temps prédéterminé,
a3) juger si la tension captée se situe dans une plage valable et, si cela est le cas, déterminer un signal valable caractérisant le signal optique capté sur base de la tension captée et, si cela n'est pas le cas
a4) répéter les étapes a1) à a3) avec un laps de temps différent du laps de temps prédéterminé et ce un nombre de fois déterminé ou jusqu'à ce qu'il soit déterminé à l'étape a3) que la tension captée se situe dans une plage valable ;
b) mémoriser le signal valable caractérisant le signal optique capté déterminé pour chaque élément photosensible (10), ensemble avec le laps de temps pour lequel a été capté un signal valable, un signal prédéterminé étant mémorisé lorsque, aux étapes a1) à a4), il n'est pas capté de signal valable caractérisant le signal optique ; et
c) obtenir le signal d'image à partir des signaux optiques mémorisés pour les différents éléments photosensibles et les laps de temps y associés.

2. Procédé suivant la revendication 1, dans lequel l'étape a1) comprend le chargement de la capacité (12) à la tension prédéterminée et, à l'étape a2), la capacité (12) est déchargée par le courant photoélectrique ou une grandeur dérivée de ce dernier.

3. Procédé suivant la revendication 2, dans lequel il est jugé, à l'étape a3), que la tension captée ne se situe pas dans la plage valable si la tension captée correspond à une décharge totale de la capacité (12), le laps de temps, différent du laps de temps prédéterminé, après lequel est captée la tension étant réduit à chaque répétition.

4. Procédé suivant la revendication 2, dans lequel il est jugé, à l'étape a3), que la tension captée ne se situe pas dans la plage valable si la tension captée correspond à une faible décharge de la capacité (12), le laps de temps, différent du laps de temps prédéterminé, après lequel est captée la tension étant augmenté à chaque répétition.

5. Procédé suivant l'une des revendications 2 à 4, dans lequel une photodiode est utilisée comme élément photosensible (10), la capacité (12) étant la capacité de couche de blocage de la photodiode.

6. Procédé suivant l'une des revendications 1 à 5, dans lequel le signal valable à l'étape b) est chaque fois mémorisé, ensemble avec le laps de temps utilisé pour capter celui-ci, dans une mémoire intermédiaire (34).
